# EUROPEAN PATENT SPECIFICATION

(11) **EP 2 719 725 B1**
(45) Date of publication and mention of the grant of the patent: **05.12.2018**
(21) Application number: 12007059.4
(22) Date of filing: 11.10.2012
(51) Int. Cl.: C08L 23/14, B29C 45/00, B65D 1/26, C08K 5/00

(54) **Nucleated polypropylene composition for containers**
Nukleierte Polypropylenzusammensetzung für Behälter
Composition de polypropylène nucléé pour récipients

(43) Date of publication of application: 16.04.2014
(73) Proprietor: Abu Dhabi Polymers Company Limited (Borouge), Abu Dhabi (AE); Borealis AG, 1220 Wien (AT)
(72) Inventor: Johnsen, Geir Kristian, Abu Dhabi (AE); Lampela, Janne, Abu Dhabi (AE); Ong, James, Abu Dhabi (AE)
(74) Representative: Kador & Partner PartG mbB

(56) References cited:
- EP-A1- 1 873 173
- EP-A1- 1 923 200
- EP-A1- 1 947 143
- WO-A1-99/24478
- WO-A1-2011/000557

## Description

The present invention relates to a container made from a polypropylene composition with an improved combination of processability, impact/stiffness balance, advantageous color and organoleptic properties. The container is usually a molded container, in particular an injection molded container.

Injection molded parts for containers, such as packaging applications (e.g. food and medical packaging and plastic cups) place specific requirements on the polymeric materials employed to produce these articles. Of paramount importance for these mass production applications is a good processability. Moreover, the articles for packaging must provide sufficient stiffness/impact balance to provide sufficient firmness and integrity to the final article. Finally, the materials, particularly for food and medical packaging, should also have good organoleptic properties. In some applications also good optical properties are desired.

EP 1 923 200 A1 provides an article comprising a biaxially oriented polypropylene composition, wherein said composition comprises a multimodal polypropylene and a polymeric nucleating agent. The articles are suitable for use in the medical and food industries.

EP 1 947 143 A1 provides a moulded article comprising a polypropylene composition, wherein said composition comprises a polymer (e.g. copolymer) of propylene and a C4 alpha olefin (e.g. 1-butene).

WO 99/24478 A1 concerns a process for producing a propylene polymer nucleated with a polymeric nucleating agent containing vinyl compound units. The method comprises modifying a catalyst by polymerizing a vinyl compound in the presence of said catalyst in a medium, which does not essentially dissolve the polymerized vinyl compound, and by continuing the polymerization of the vinyl compound until the concentration of unreacted vinyl compounds is less than about 0.5 wt- %. The thus obtained modified catalyst composition is used for polymerizing propylene optionally together with comonomers in the presence of said modified catalyst composition. Modification of the catalyst according to the present invention will reduce production costs and provide highly reliable catalyst activity.

WO 2011/000557 A1 relates to a high flow polypropylene composition comprising (A) a low molecular weight propylene homopolymer fraction and (B) a high molecular weight propylene copolymer fraction, having a comonomer content of not higher than 8 wt%, wherein the ratio between the MFR₂ of fraction (A) and the MFR₂ of fraction (B) is at least 3 and wherein the MFR₂ of the entire composition is at least 5 g/10 min, the values of MFR₂ being measured according to ISO 1133 (230°C, 2.16 kg load), and to processes for producing such compositions and to articles made there from.

EP 1 873 173 A1 provides polymer compositions, comprising a random propylene copolymer having an MFR₂ value of 70 or more (g/10 min), which is in particular suitable for preparing thin-walled packaging products by injection molding.

High melt flow rate (MFR) of polypropylene for improving processability can be provided during the polymerisation process by controlling the chain length of the formed polymer by using so called chain termination agent (also known e.g. as molecular weight or MFR controlling agent), like hydrogen, or by treating the produced polypropylene with peroxide to reduce the chain length of the polymer (so called vis-breaking).

An increase of MFR increases the stiffness, while at the same time the impact strength property is sacrificed. If the high MFR polypropylene is produced using peroxide treatment, this has a less deteriorating effect on the impact properties compared to a polypropylene where the high MFR is provided during the polymerisation process. The reason is believed to be the narrower molecular weight distribution (MWD) of the peroxide treated (vis-broken) high MFR polypropylene compared to the MWD of "reactor made" high MFR polypropylene. However, it is well known that vis-broken polypropylene has i.a. undesired organoleptic properties, such as unwanted taste and odor, and can confer an undesirable color effect (yellow color) to the final product.

Hence, there is the need for a composition, particularly for thin-wall packaging, having a desirable impact/stiffness balance with good processability and simultaneously good colour properties and organoleptic properties.

Therefore, the present invention provides an injection moulded (IM) container for food packaging comprising a polypropylene composition, the polypropylene composition comprising
- a propylene copolymer (A) with one or more olefin comonomer(s) in an amount of 95.0 to 99.25 wt.%, based on the total weight of the polypropylene composition, wherein propylene copolymer (A) has
   (i) a melt flow rate, determined according to ISO 1133 at 230 °C and under a load of 2.16 kg, of at least 25 g/10 min and not higher than 200 g/10 min; and
   (ii) a total olefin comonomer content of not more than 3.0 wt.% and at least 0.1 wt.%, based on the total weight of the polypropylene composition;
      and
- a nucleating agent (B), which is a polymeric nucleating agent,
wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007).

It has been surprisingly found that the above defined feature combination of the polypropylene composition of the container of the invention provides a highly advantageous impact/stiffness balance. Unexpectedly, the claimed combination provides increased impact properties to the moulded container, while at least maintaining stiffness at a level advantageous for injection moulded containers. As a result, the container of the invention has excellent firmness and, additionally, less or no warpage problems.

Furthermore, the present combination of propylene copolymer (A) and nucleating agent (B) provides good organoleptic properties and, additionally, for instance thin-wall articles are advantageously clear and transparent with whitish appearance, even without any additional nucleating agents/clarifiers. For instance, when containers are stacked up, the formed stack has a desirable whitish appearance. If desired, the clarity and stiffness can be further improved using additional nucleating agents and/or clarifiers.

As to advantageous processability properties, the flowability of the polymer composition of the invention is excellent. Moreover, the polypropylene composition of the container of the invention allows for a reduction of the total cycle time for producing the container. Cycle time is defined herein as the time needed for introducing by injection the polypropylene melt to a mould as well as solidifying and removing of the injection moulded article from the mould. Furthermore, the claimed features of the polypropylene composition of the container allow for a reduction of the processing temperature during the moulding process. Finally, also organoleptic properties are better compared to those of usual peroxide treated high flow polypropylene materials. Moreover, any degradation problems can be avoided.

"The propylene composition of the invention", "the propylene composition of the container of the invention", and "the container of the invention" are also referred herein shortly as "the propylene composition", "the propylene composition of the container", and "the container".

The injection moulded (IM) container is herein referred to as "container".

The container of the invention has preferably a wall thickness of 3.0 mm or less. More preferably, the wall thickness of the container is 2.0 mm or less, still more preferably 1.0 mm or less. The lower limit is preferably 0.2 mm. Preferably, the wall thickness of the container is within the range of 0.3 to 1.0 mm, more preferably 0.4 to 0.9 mm, more preferably 0.4 to 0.75 mm.

Unless otherwise stated, the below defined preferable properties of the container of the invention are measured by re-melting the container and the melt as such is used for the property measurement or a test specimen is first formed from the melt and the obtained test specimen is used for the property measurement, depending on the requirements of the measurement. The below used expression for properties of the "polypropylene composition of the container (of the invention)" means that the defined property is measured from the polypropylene composition before it is moulded to a container of the invention.

The advantageous balance between impact and, respectively, stiffness properties of the container of the invention is expressed herein i.a. as Charpy Notched Impact Strength, as Instrumental Falling Weight (IFW) and, respectively, Tensile Modulus; the excellent processability of the polypropylene composition of the container of the invention is expressed i.a. as Melt Flow Rate, Spiral Flow and total Cycle Time for producing the container; and advantageous optical properties are expressed as Haze. The above determination methods including sample preparation are defined later below under "Measurement methods".

The polypropylene composition of the container, preferably the container, has preferably a Melt Flow Rate MFR₂, determined according to ISO 1133 at 230 °C and under a load of 2.16 kg, of at least 25 g/10 min, of at least 35 g/10 min, more preferably of at least 45 g/10 min and most preferably of at least 50 g/10 min. Preferably, said MFR₂ of the polypropylene composition of the container, preferably the container, is not higher than 200 g/10 min, more preferably not higher than 125 g/10 min and most preferably not higher than 80 g/10 min.

The propylene copolymer (A) is a copolymer of propylene, preferably a random copolymer of propylene, with one or more olefin comonomer(s).

The term "random" indicates that the comonomers are randomly distributed within the propylene copolymer. The term random is understood according to IUPAC (Glossary of basic terms in polymer science; IUPAC recommendations 1996).

Total olefin comonomer content of the polypropylene composition of the container, preferably the container, is preferably not more than 5.0 wt.%, preferably not more than 4.0 wt.%, more preferably not more than 3.0 wt.%, still more preferably not more than 2.5 wt.%, still more preferably not more than 1.75 wt.%, still more preferably not more than 1.5 wt.% and most preferably not more than 1.3 wt.%, and further preferably said total olefin comonomer content is at least 0.1 wt.%, based on the total weight of the polypropylene composition (100 wt.%), preferably based on the weight of the container.

The polypropylene composition of the container, preferably the container, has preferably a Xylene Solubles content (XS), determined according to ISO 16152:2005 of not more than 5.5 wt.%, more preferably not more than 4.5 wt.%, still more preferably not more than 3.0 wt.%, and even more preferably of from 1.0 to 2.5 wt.%.

The Charpy Notched Impact Strength of the polypropylene composition of the container, preferably the container, is preferably at least 1.9 kJ/m², preferably of from 1.9 to 7.0 kJ/m², more preferably of from 2.0 to 6.0 kJ/m², and still more preferably of from 2.0 to 5.0 kJ/m², when determined according to ISO 179-1:2000 on notched specimen of 80x10x4mm, cut from test specimen ISO 527-2:1996 type 1A. Notched impact specimen according to ISO 179-1/1eA was used. Testing temperature is 23±2 °C, and injection moulding is carried out according to ISO 1873-2:2007.

The puncture energy of Instrumental Falling Weight (IFW) test of the polypropylene composition of the container, preferably the container, is preferably more than 0.1 J, more preferably is more than 0.14 J, still more preferably is between 0.14 and 0.5 J, still more preferably is between 0.14 and 0.3 J, and most preferably is between 0.14 and 0.2 J, when determined according to ISO 6603-2:2000 on 0.5 mm thickness, cut from the bottom of thin-wall rectangular box with 0.5 mm thickness (herein e.g. 145x95x50mm box was used) as described later under "Measurement methods".

The Tensile Modulus of the polypropylene composition of the container, preferably the container, is preferably at least 1400 MPa, still more preferably of 1500 to 3000 MPa, and most preferably 1600 to 2500 MPa, when determined according to ISO 527-1:1996 and ISO 527-2:1996 on test specimen ISO 527-2:1996 type 1A moulded specimen, the injection moulding carried out according to ISO 1873-2:2007.

In the present invention, the Spiral Flow has been determined at 600 bar, 1000 bar and 1400 bar, i.e. Spiral Flow_{(600 bar)}, Spiral Flow_{(1000 bar)} and Spiral Flow_{(1400 bar)}, respectively, according to the method as described in detail below under "Measurement methods".

The Spiral Flow_{(600 bar)} of the polypropylene composition of the container, preferably the container, is preferably at least 20 cm, more preferably at least 30 cm and most preferably at least 33 cm.

Preferably, the Spiral Flow_{(600 bar)} of the polypropylene composition of the container, preferably the container, is below 50 cm.

The Spiral Flow(_{1000 bar)} of the polypropylene composition of the container, preferably the container, is preferably at least 40 cm, more preferably at least 45 cm and most preferably at least 50 cm.

Preferably, the Spiral Flow(_{1000 bar)} of the polypropylene composition of the container, preferably the container, is below 70 cm.

Preferably, the Spiral Flow_{(1400 bar)} of the polypropylene composition of the container, preferably the container, is at least 50 cm, more preferably at least 60 cm and most preferably at least 65 cm.

Preferably, the Spiral Flow_{(1400 bar)} of the polypropylene composition of the container, preferably the container, is below 90 cm.

The Haze of the polypropylene composition of the container, preferably the container, is preferably below 40 %, more preferably below 30 %, and still more preferably below 20 %. The lower limit of the haze is not critical and typically more than 2 %. The haze is determined according to ASTM D 1003-07 on test specimen ISO 294-3:2003 60x60x0.5 mm small plate ISO type D1.

As to the preparation process of the polypropylene composition of the container of the invention, in a first preparation embodiment, the nucleating agent (B) and the copolymer (A) are combined together, optionally with one or more other additives, by mechanical blending.

Optionally, and preferably, the nucleating agent (B) is blended to propylene copolymer (A) in the form of a masterbatch (MB) comprising said nucleating agent (B), a carrier polymer (B1) and, optionally, further additives. Mechanical blending (also called "compounding") is a well known and used technique for combining components of a polymer composition. Mechanical blending can be effected e.g. in a mixer or in an extruder, preferably in an extruder, in a manner well known in the art. Examples of conventional compounding or blending devices are e.g. a Banbury mixer, a 2-roll rubber mill, Buss-co-kneader or an extruder, preferably a twin screw extruder.

Accordingly, in a preferable embodiment of the present invention, the container of the invention comprises, preferably consists of, a polypropylene composition, the polypropylene composition comprising
- propylene copolymer (A); and
- a masterbatch (MB) comprising a nucleating agent (B) and a carrier polymer (B1).

In an alternative, second preparation embodiment, the nucleating agent (B) is introduced to the propylene copolymer (A) during the polymerisation process of the propylene copolymer (A).

Preferred embodiments of the first and second preparation embodiments are defined further below.

The amount of propylene copolymer (A) is preferably of 96.5 to 98.5 wt.%, based on the combined weight of propylene copolymer (A), nucleating agent (B) and optional carrier polymer (B1), preferably based on the total weight of the polypropylene composition (100 wt.%), more preferably based on the weight of the container of the invention.

Preferably, the amount of nucleating agent (B) is not more than 3000 ppm, preferably 0.02 to 2000 ppm, more preferably 0.025 to 2000 ppm, based on the combined weight of propylene copolymer (A), nucleating agent (B) and optional carrier polymer (B1), preferably based on the total weight of the polypropylene composition (100 wt.%), more preferably based on the weight of the container of the invention.

The amount of the optional masterbatch, i.e. carrier polymer (B1) and nucleating agent (B) and optional further additives, is preferably at least 0.25 wt.%, more preferably at least 0.75 wt.% and most preferably of least 1.5 wt.%, based on the combined weight of propylene copolymer (A), nucleating agent (B) and optional carrier polymer (B1), preferably based on the total weight of the polypropylene composition (100 wt.%), more preferably based on the weight of the container of the invention.

More preferably, said MB is preferably present in an amount of not more than 10.0 wt.%, more preferably not more than 5.0 wt.% and most preferably not more than 3.5 wt.%, with the preferred amount of MB being from 1.5 to 3.5 wt.%, based on the combined weight of propylene copolymer (A), nucleating agent (B) and optional carrier polymer (B1), preferably based on the total weight of the polypropylene composition (100 wt.%), more preferably based on the weight of the container of the invention.

Moreover, the propylene composition of the container of the invention may contain further additives in addition to the nucleating agent (B), including without limiting to, further nucleating agents, clarifiers, brighteners, acid scavengers and antioxidants, as well as slip agents, inorganic filler and UV light stabilizers. Each additive can be used e.g. in conventional amounts, the total amount of additives present in the propylene composition, preferably in the container, being preferably as defined below. Examples of acid scavengers is Ca-stearate; of antioxidants are phenolic antioxidant and/or phosphorous antioxidant; of UV light stabilizers are hindered amine light stabilizer. Examples of further nucleating agents, clarifiers and brighteners are given below in context of an alternative embodiment (D) of the container of the invention.

Such additives are generally commercially available and are described, for example, in "Plastic Additives Handbook", 5th edition, 2001 of Hans Zweifel.

The total amount of optional further additives is preferably between 0.0001 and 2.0 wt.%, more preferably between 0.0001 and 1.0 wt.%, still more preferably between 0.0001 and 0.5 wt.%, based on the total weight of the polypropylene composition (100 wt.%), more preferably based on the weight of the container of the invention. In case any optional additive is added in a masterbatch, then the carrier material of the additive is calculated to the total amount of the additives based on the total weight of the polypropylene composition (100 wt.%), more preferably based on the weight of the container of the invention.

In a preferred embodiment, the polypropylene composition more preferably the container of the invention, comprises, preferably consists of, preferably in any of the above given amounts, the propylene copolymer (A), the nucleating agent (B) in the form of a masterbatch (MB) comprising, preferably consisting of, said nucleating agent (B), a carrier polymer (B1) and optional further additives; as well as optional further additives.

The container of the invention is preferably produced by injection moulding, using the conventional injection moulding techniques and moulding devices. Generally, injection moulded (IM) containers can be produced a follows:
Conventional injection molding process can be used (examples of IM machines are Netstal 120T or Ferromatik Magna T200), where the polymer material is first (a) melted and then (b) injected into a mould which defines the shape of the article to be produced (e.g. parts of a thin-wall box). In the mould, the polymer material is (c) cooled until solidification, after which (d) the finished part is ejected out, and then the next injection cycle begins. Total cycle time as used herein for producing the container means above steps (a) to (d). Following parameters can be used as preferable guidelines:
Melt temperature 210 - 260 °C,
Holding pressure 200 - 500 bar (minimum to avoid sink marks),
Mould temperature 10 - 30 °C,
Injection speed for example can be 200 mm/s.

The present invention is furthermore directed to the use of a polypropylene composition comprising
- a propylene copolymer (A) with one or more olefin comonomer(s) in an amount of 95.0 to 99.25 wt.%, based on the total weight of the polypropylene composition, wherein propylene copolymer (A) has
   (i) a melt flow rate, determined according to ISO 1133 at 230 °C and under a load of 2.16 kg, of at least 25 g/10 min and not higher than 200 g/10 min; and
   (ii) a total olefin comonomer content of not more than 3.0 wt.% and at least 0.1 wt.%, based on the total weight of the polypropylene composition;
   and
- a nucleating agent (B), which is a polymeric nucleating agent, wherein the nucleating agent (B) is the only nucleating agent and/or clarifier present in the polypropylene composition;
wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007),
for the manufacture of an injection moulded (IM) container.

The container of the present invention is highly suitable for thin-wall packaging applications. Moreover, the container of the invention has pleasant aesthetic appearance, firmness and integrity, preferably combined with less or no warpage problems and less or no taste/odor problems. Thus, the container of the invention is particularly preferable for food packaging applications, including open and closable containers for food packaging and serving foods and drinks, which include cups.

The below given preferable properties, property ranges and embodiments of the components of the polypropylene composition and of the preparation method of the polypropylene composition of the container of the invention can be combined in any combination and apply as preferable properties, property ranges and embodiments of the container including the preferred properties, property ranges and embodiments as described above, below or in claims.

### Components of the polypropylene composition of the container of the invention

The invention with the claimed feature combination of the propylene composition provides highly advantageous impact/stiffness balance, particularly unexpectedly high Charpy Impact Strength, even when the claimed high MFR of propylene copolymer (A) is provided during the polymerisation process thereof.

The propylene copolymer (A) with the MFR₂ of at least 25 g/10min and not higher than 200 g/10 min, including the preferred ranges thereof, of the polypropylene composition of the container of the invention is provided without treating the propylene copolymer (A) with peroxide after the polymerisation thereof.

Such a treatment, as is well-known in the art, may be used to increase the MFR₂ of a propylene polymer.

The adjustment of the MFR during the polymerisation process of propylene copolymer (A) can be done by using e.g. a chain termination agent (known also e.g. as molecular weight of MFR controlling agent), like hydrogen, in a conventional manner.

More preferably, the polypropylene composition of the container of the invention has not been subjected to any peroxide treatment.

The melt flow rate MFR₂, determined according to ISO 1133 at 230 °C and under a load of 2.16 kg, of propylene copolymer (A) is preferably at least 35 g/10 min, more preferably at least 45 g/10 min and most preferably at least 50 g/10 min. Furthermore, preferably, said MFR₂ of propylene copolymer (A) is not higher than 125 g/10 min and most preferably not higher than 80 g/10 min.

The propylene copolymer (A) is a copolymer of propylene, preferably a random copolymer of propylene, with one or more olefin comonomer(s), whereby the total olefin comonomer content is preferably not more than 2.5 wt.%, more preferably not more than 1.75 wt.%, still more preferably not more than 1.5 wt.% and most preferably not more than 1.3 wt.%, based on the total weight of the random copolymer of propylene, preferably based on the total weight of the polypropylene composition (100 wt.%), more preferably based on the weight of the container. Furthermore, said total olefin comonomer content is at least 0.1 wt.%, based on the total weight of the random copolymer of propylene, preferably based on the total weight of the polypropylene composition (100 wt.%), more preferably based on the weight of the container.

The comonomers of said random copolymer of propylene are preferably selected from C₂ and C₄ to C₂₀ alpha-olefins, more preferably from C₂ and C₄ to C₁₀ alpha-olefins and most preferably from C₂ and C₄ to C₆ alpha-olefins. A particular preferred comonomer is ethylene.

The propylene copolymer (A) has preferably a xylene solubles content (XS), determined according to ISO 16152:2005, of not more than 5.5 wt.%, more preferably not more than 4.5 wt.%, still more preferably not more than 3.0 wt.%, even more preferably of from 1.0 to 2.5 wt.%.

As to nucleating agent (B) of the polypropylene composition of the container of the invention, preferably, the nucleating agent (B) is selected from
- polymeric nucleating agents,
- salts of monocarboxylic acids and polycarboxylic acids, for example sodium benzoate;
- Sorbitol compounds, for instance diacetals of sorbitol or xylitol, for example 1,3 : 2,4 Bis(3,4-dimethylbenzylidene) sorbitol (CAS-no. 135861-56-2, e.g. Millad 3988, supplier Milliken);
- nonitol based nucleating agents, for instance 1,2,3-trideoxy-4,6:5,7-bis-O-((4-propylphenyl) methylene) nonitol (CAS-no. 882073-43-0, e.g. Millad NX8000, supplier Milliken):
- Phosphorous-based compounds, for instance mono-, bis- or tetra-phenyl phosphates, for example Sodium 2,2'- methylene bis-(4,6-di-tert. butylphenyl) phosphate (CAS-no. 85209-91-2, e.g. NA-11, supplier Adeka Corporation) or Hydroxybis (2,4,8,10-tetra-tert. butyl-6-hydroxy-12H-dibenzo(d,g)(1.,3,2) dioxaphosphocin 6-oxidato) aluminium (CAS-no. 151841-65-5, e.g. ADK STAB NA-21, supplier Adeka Corporation), or
- talc,
or any mixtures thereof.

In a preferred embodiment of the nucleating agent (B) said nucleating agent (B) is a polymeric nucleating agent, preferably a polymerized vinyl compound, more preferably a polymeric nucleating agent obtainable by polymerising vinylcycloalkane monomers or vinylalkane monomers.

The polymeric nucleating agent is most preferably a polymerized vinyl compound according to the following formula

CH₂=CH-CHR¹R² (I)

wherein R¹ and R² together form a 5- or 6-membered saturated, unsaturated or aromatic ring, optionally containing substituents, or independently represent an alkyl group comprising 1 to 4 carbon atoms, whereby in case R₁ and R₂ form an aromatic ring, the hydrogen atom of the -CHR1R2 moiety is not present.

Even more preferably, nucleating agent (B) is selected from: vinyl cycloalkane polymer, preferably vinyl cyclohexane (VCH) polymer, vinyl cyclopentane polymer and vinyl-2-methyl cyclohexane polymer. The preferred nucleating agent (B) is vinyl cyclohexane (VCH) polymer.

As mentioned above, in a preferred embodiment, nucleating agent (B) is a polymeric nucleating agent, most preferably a polymerized vinyl compound according to formula (I) as defined above, even more preferably vinyl cyclohexane (VCH) polymer.

The amount of nucleating agent (B) preferably is not more than 500 ppm, more preferably is from 0.025 to 200 ppm, and most preferably is from 0.1 to 100 ppm, based on the combined weight of propylene copolymer (A), nucleating agent (B) and optional carrier polymer (B1), preferably based on the total weight of the polypropylene composition (100 wt.%), more preferably based on the weight of the container of the invention.

If the nucleating agent is incorporated to the propylene copolymer (A) in the form of masterbatch (MB), then the carrier polymer (B1) has preferably a MFR₂ (ISO 1133, 2.16 kg, 230°C) of at least 2.0 g/10, more preferably of at least 5.0 g/10min, still more preferably of from 5.0 to 200 g/10 min, still more preferably of from 5.0 to 125 g/10 min, and most preferably of from 5.0 to 80 g/10 min.

Preferably, the melting temperature of the optional carrier polymer (B1), determined by differential scanning calorimetry (DSC) according to ISO 11357-3, is within the range of 155 °C to 170 °C, more preferably within the range of 160 °C to 175 °C,

The optional carrier polymer (B1) of the masterbatch (MB) is preferably a polypropylene, preferably a propylene homo- or copolymer, more preferably a propylene homopolymer.

In one embodiment, embodiment (C), of the container, the invention provides an injection moulded (IM) container for food packaging comprising, preferably consisting of, a polypropylene composition, the polypropylene composition comprising
- a propylene copolymer (A) with one or more olefin comonomer(s) in an amount of 95.0 to 99.25 wt.%, based on the total weight of the polypropylene composition, wherein propylene copolymer (A) has
   (i) a melt flow rate, determined according to ISO 1133 at 230 °C and under a load of 2.16 kg, of at least 25 g/10 min and not higher than 200 g/10 min; and
   (ii) a total olefin comonomer content of not more than 3.0 wt.% and at least 0.1 wt.%, based on the total weight of the polypropylene composition;
and
a nucleating agent (B), which is a polymeric nucleating agent, and is as defined above, below or in the claims,
and wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007),
and wherein the nucleating agent (B) is the only nucleating agent and/or clarifier present in the polypropylene composition.

In this context the term "nucleating agent and/or clarifier" or "nucleating agent/clarifier" denotes that said additive can function as nucleating agent only, as clarifier only, or as both. Moreover, said "nucleating agent and/or clarifier" means commercially available product known or offered for one or both mentioned purposes.

This embodiment (C) provides the highly advantageous balance between stiffness, impact and optical properties suitable particularly, and preferably, for thin-wall packaging applications. The produced thin-wall containers are firm with reduced or no warpage, with desirable low or no organoleptic properties and, also importantly, have very advantageous aesthetic appearance. Moreover, said embodiment (C) provides industrially feasible low cost solution in terms of polymer material/additive costs and process throughput.

Although good clarity and transparency together with advantageous impact/stiffness are already obtained with the propylene composition of the container as defined in claim 1 and in embodiment (C), however, there may be moulding, preferably injection moulding, applications with very high requirements for optical properties.

Thus, an alternative embodiment (D) of the container of the invention provides an injection moulded (IM) container, for food packaging, comprising, preferably consisting of, a polypropylene composition, the polypropylene composition comprising
- a propylene copolymer (A) with one or more olefin comonomer(s) in an amount of 95.0 to 99.25 wt.%, based on the total weight of the polypropylene composition, wherein propylene copolymer (A) has
   (i) a melt flow rate, determined according to ISO 1133 at 230 °C and under a load of 2.16 kg, of at least 25 g/10 min and not higher than 200 g/10 min; and
   (ii) a total olefin comonomer content of not more than 3.0 wt.% and at least 0.1 wt.%, based on the total weight of the polypropylene composition;
   and
- a nucleating agent (B), which is a polymeric nucleating agent and is as defined above, below or in the claims,
   and
- an additive (C1) which is different from nucleating agent (B) and is a nucleating agent and/or clarifier,
wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007).

The "nucleating agent and/or clarifier" as additive (C1) has the same meaning as given above in embodiment (C).

Preferable additive (C1) is selected from the below groups:
1. Salts of monocarboxylic acids and polycarboxylic acids, for example sodium benzoate;
2. Sorbitol compounds, for instance diacetals of sorbitol or xylitol;
3. Nonitol based nucleating agents;
4. Phosphorous-based compounds, for instance mono-, bis- or tetra-phenyl phosphates;
5. Hindered phenyl amines, preferably hindered phenyl propionamides;
6. Talc; or
7. A mixture of additives (C1) from groups 1. to 6.

The listed nucleating agents/clarifiers are known and commercially available and offered for the nucleation and/or clarifier use.

More preferably, the additive (C1) is selected from the below groups:
2. Sorbitol compounds, preferably diacetals of sorbitol or xylitos, more preferably from Bis(3,4-dimethylbenzylidene) sorbitol (CAS-no. 135861-56-2) or 1,3:2,4-di-O-(p-chlorobenzylidene)-D-sorbitol (CAS-no. 82203-23-4);
3. Nonitol based nucleating agents, preferably from 1,2,3-trideoxy-4,6:5,7-bis-O-((4-propylphenyl) methylene) nonitol (CAS-no. 882073-43-0);
4. Phosphorous-based compounds, for instance mono-, bis- or tetra-phenyl phosphates, for example Sodium 2,2'- methylene bis-(4,6-di-tert. butylphenyl) phosphate (CAS-no. 85209-91-2), Hydroxybis (2,4,8,10-tetra-tert. butyl-6-hydroxy-12H-dibenzo(d,g)(1.,3,2) dioxaphosphocin 6-oxidato) aluminium (CAS-no. 151841-65-5) or ADK STAB NA-71 phosphate based compound supplied by Adeka;
5. Hindered phenyl amines, preferably hindered phenyl propionamides, more preferably N-[3,5-bis-(2,2-dimethyl-propionylamino)-phenyl]-2,2-dimethyl-propionamide (CAS-no. 745070-61-5);
8. A mixture of additives (C1) from groups 2. to 5.

The most preferable additives (C1) from above groups are 2. Sorbitol compounds, preferably diacetals of sorbitol or xylitos, more preferably from Bis(3,4-dimethylbenzylidene) sorbitol (CAS-no. 135861-56-2) and 3. Nonitol based nucleating agents, preferably from 1,2,3-trideoxy-4,6:5,7-bis-O-((4-propylphenyl) methylene) nonitol (CAS-no. 882073-43-0). These additive (C1) types 2. and 3. are described e.g. in EP 647 643 B, EP 569 198 B and EP 2 010 543 A.

The above most preferable 2. sorbitol compound with CAS-no. 135861-56-2 is supplied e.g. by Milliken under Tradename Millad 3988 and 3. nonitol compound with CAS-no. 882073-43-0 is supplied e.g. by Milliken under Tradename Millad NX8000 series.

Surprisingly, in addition to improved optical properties, the combination of this alternative embodiment (D) further contributes to the stiffness/impact balance of the invention. Unexpectedly, said alternative embodiment (D) has at least the high Charpy Notched Impact Strength, while the optical properties, such as haze (the haze value further decreases), are improved further. Moreover, the desirable effect is obtained already with amounts of additive (C1) which are lower than conventionally needed when using additive (C1) alone.

In this alternative embodiment (D) of the container of the invention it is preferred that the nucleating agent (B) is a polymeric nucleating agent, most preferably poly vinylcyclohexane as defined above, below or in claims, and additive (C1) is as defined above, below or in claims.

If present, the amount of the additive (C1) is preferably not more than 3000 ppm, more preferably not more than 2500 ppm and most preferably 1 to 2100 ppm, based on the total weight of the propylene composition (100 wt.%), preferably based on the weight of the container.

Still more preferably, the amount of the additive (C1) is not more than 1500 ppm, still more preferably not more than 1000 ppm, still more preferably not more than 800 ppm, even more preferably from 1 to 800 ppm, based on the total weight of the propylene composition (100 wt.%), preferably based on the weight of the container.

The alternative embodiment (D) of the polypropylene composition of the container of the invention with the nucleating agent (B) and additive (C1) combination is advantageous in case a highly aesthetic appearance is desired. In this embodiment (D), e.g. optical brighteners, may also be added depending on the end application. Optical brighteners are additives which absorb light in the UV spectrum and emit in the blue region of the visible spectrum. TINOPAL® from Ciba represents one feasible example of optical brighteners. The amount of the optional brightener is preferably at least 0.01 ppm, more preferably at least 0.05 ppm and preferably less than 200 ppm, more preferably less than 100 ppm based on the total weight of the propylene composition (100 wt.%), preferably based on the weight of the container.

In this alternative embodiment (D) of the polypropylene composition of the container of the invention the haze, determined according to ASTM D 1003-07 on test specimen ISO 294-3:2003 60x60x0.5 mm small plate ISO type D1, is preferably 20 % or less, more preferably 10 % or less, even more preferably 6 % or less, and most preferably from 2 to 6%.

It is noted that the alternative embodiment (D) is only an alternative to the container of the invention in which said additive (C1) is absent from the polypropylene composition of the container.

### Preparation process of propylene composition, propylene copolymer (A), and optional carrier polymer (B1)

In the above mentioned first preparation embodiment of the propylene composition of the container of the invention, the nucleating agent (B) can be incorporated as such to the polypropylene copolymer (A), which is a polypropylene copolymer as defined above, below or in the claims; or, preferably, in the form of a masterbatch (MB) comprising the nucleating agent (B) as defined above, below or in the claims, which is preferably vinyl cyclohexane (VCH) polymer; and a carrier polymer (B1), which is preferably a propylene homo- or copolymer, more preferably propylene homopolymer, as defined above or in the claims.

Said carrier polymer (B1) and nucleating agent (B) can be blended together mechanically in a conventional manner, as mentioned above, to form the MB. Alternatively the MB is formed by introducing the nucleating agent (B) to the carrier polymer (B1) during the polymerisation process thereof.

In this first preparation embodiment it is preferred that the nucleating agent (B) is in a form of a master batch (MB). It is preferred that said MB is produced by polymerising the carrier polymer (B1), which is preferably a propylene homo- or copolymer, preferably propylene homopolymer as defined above, below or in the claims, in the presence of a modified catalyst system, wherein the modification means the prepolymerisation of the catalyst in the presence a vinyl compound of formula (I) as defined above, below or in the claims for nucleating agent (B), more preferably in the presence of vinyl cyclohexane (VCH). Said modification of the catalyst is further described below under the preparation of the carrier polymer (B1).

The formed MB is preferably pelletised, optionally together with one or more additives, in an extruder in a conventional manner before blending mechanically with propylene copolymer (A). Moreover, it is preferred that also the propylene copolymer (A), optionally together with one or more additives, is in form of pellets when introduced to said blending step.

In this first preparation embodiment of the propylene composition it is preferred that the amount of the nucleating agent (B) is not more than 300 ppm, more preferably not more than 200 ppm, still more preferably not more than 100 ppm, based on the combined weight of MB and propylene copolymer (A), preferably based on the total weight of the polypropylene composition (100 wt.%), more preferably based on the weight of the container of the invention.

Even more preferably, the amount of the nucleating agent (B) is not more than 50 ppm, still more preferably not more than 20 ppm, still more preferably not more than 10 ppm, still more preferably not more than 5 ppm, still more preferably not more than 3 ppm, still more preferably not more than 1 ppm, and most preferably not more than 0.80 ppm, based on the combined weight of MB and propylene copolymer (A), preferably based on the total weight of the polypropylene composition (100 wt.%), more preferably based on the weight of the container of the invention.

Even more preferably, the amount of nucleating agent (B) is preferably at least 0.025 ppm, more preferably at least 0.075 ppm, still more preferably at least 0.1 ppm, even more preferably at least 0.15 ppm, and still more preferably from 0.075 to 5 ppm, still more preferably from 0.1 to 3 ppm, and most preferably from 0.15 to 0.8 ppm, based on the combined weight of MB and propylene copolymer (A), preferably based on the total weight of the polypropylene composition (100 wt.%), more preferably based on the weight of the container of the invention.

Furthermore, in this first preparation embodiment it is preferred that the MB contains nucleating agent (B) in an amount of not more than 500 ppm, more preferably of 1 to 200 ppm, and still more preferably of 5 to 100 ppm, based on the weight of the MB (100 wt.%).

The amount of the optional carrier polymer (B1) in the MB is preferably at least 90 wt.%, more preferably at least 95 wt.% still more preferably 96.5 wt.%, and most preferably at least 99.0 to 99.8 wt%, based on total weight of the of the MB (100 wt.%).

In the above mentioned alternative second preparation embodiment of the propylene composition of the container of the invention, the nucleating agent (B) is incorporated to the propylene copolymer (A) by polymerising propylene copolymer (A) in the presence of a modified catalyst system, wherein the modification means the prepolymerisation of the catalyst in the presence a vinyl compound of formula (I) as defined above or in claims for nucleating agent (B), more preferably in the presence of vinyl cyclohexane (VCH). Said modification of the catalyst is further described below under the preparation of the optional, and preferable, carrier polymer (B1) of MB.

In this second preparation embodiment the obtained propylene copolymer (A) nucleated with nucleating agent (B), is preferably then pelletised, optionally together with one or more additives.

In this second preparation embodiment it is preferred that the amount of nucleating agent (B) present in the propylene copolymer (A) is not more than 500 ppm, more preferably is 0.025 to 200 ppm, still more preferably is 1 to 100 ppm, and most preferably is 5 to 100 ppm, based on the of propylene copolymer (A), preferably based on the total weight of the propylene composition (100 wt%), more preferably based on the weight of the container.

The first preparation embodiment is preferred for incorporating the nucleating agent (B) to polypropylene composition of the invention.

Moreover, it is most preferred to incorporate nucleating agent (B) in the form of MB to propylene copolymer (A).

Accordingly, a preferable embodiment of the container of the invention comprises, preferably consists of, a polypropylene composition, the polypropylene composition comprising
- a propylene copolymer (A) with one or more olefin comonomer(s) in an amount of 95.0 to 99.25 wt.%, based on the total weight of the polypropylene composition, wherein propylene copolymer (A) has
   (i) a melt flow rate, determined according to ISO 1133 at 230 °C and under a load of 2.16 kg, of at least 25 g/10 min and not higher than 200 g/10 min; and
   (ii) a total olefin comonomer content of not more than 3.0 wt.% and at least 0.1 wt.%, based on the total weight of the polypropylene composition;
   and
- a masterbatch (MB) comprising nucleating agent (B) and a carrier polymer (B1), which is preferably a propylene homo- or copolymer, more preferably a propylene homopolymer, as defined above, below or in the claims.

The propylene copolymer (A) and the optional, and preferable, carrier polymer (B1) can be produced by polymerisation in the presence of any conventional coordination catalyst including Ziegler-Natta, chromium and single site (like metallocene catalyst), preferably in the presence of a Ziegler-Natta catalyst. Such Ziegler-Natta catalysts typically comprise a solid transition metal component and a cocatalyst.

As already mentioned, it is preferred that the nucleating agent (B) is not introduced during the polymerisation of the propylene copolymer (A), but added in form of a MB together with carrier polymer (B1) to said propylene copolymer (A).

Accordingly, the propylene copolymer (A) is preferably polymerized in the presence of a solid catalyst component, comprising a transition metal component and a magnesium component, as disclosed in WO 03/000757, WO 03/000754 and WO 2004/029112.

These catalysts are solid catalysts with spherical particles having compact structure and low surface area of the particles. Furthermore, these catalysts are featured by uniform distribution of catalytically active sites thorough the catalyst particles. These catalysts are prepared by emulsion-solidification method. The dispersed phase in the form of liquid droplets of the emulsion forms the catalyst part, which is transformed to solid catalyst particles during the solidification step.

As said, most preferably the propylene copolymer (A) obtained from the polymer reactor does not contain any added nucleating agent (B), but the nucleating agent (B) is added later in a separate step.

As to preparation of the carrier polymer (B1), it is preferred that the nucleating agent (B) is introduced during the polymerisation of the carrier polymer (B1). Accordingly, carrier polymer (B1), which is preferably propylene homo- or copolymer, more preferably propylene homopolymer, is produced using a modified Ziegler Natta catalyst. The modification is effected by prepolymerising the solid Ziegler Natta catalyst component with a vinyl compound of the formula (I) as defined above, below or in the claims, preferably with vinyl cyclohexane (VCH).

Preferably, after the modification step the weight ratio (g) of the polymer of the vinyl compound of the formula (I) as defined above or in claims, preferably of the vinyl cyclohexyl (VCH) polymer, to solid catalyst component is of up to 5 (5:1), preferably of up to 3 (3:1) most preferably from 0.5 (1:2) to 2 (2:1).

Preparation of nucleated polypropylene is disclosed e.g. in EP 1 028 984. As to the solid Ziegler Natta catalyst component used for the modification, said catalyst component comprises preferably a transition metal component and a magnesium halide. These compounds may be supported on a particulate support, such as inorganic oxide, like silica or alumina, or, usually, the magnesium halide may form the solid support. Examples of such solid catalyst components are disclosed, among others, in WO 87/07620, WO 92/21705, WO 93/11165, WO 93/11166, WO 93/19100, WO 97/36939, WO 98/12234, WO 99/33842.
As is well known, the solid catalyst components for polymerising the propylene copolymer (A) and the optional, and preferable, carrier polymer (B) typically comprise, in addition to the magnesium halide and transition metal compound, an electron donor (internal electron donor).
Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4,347,160, US 4,382,019, US 4,435,550, US 4,465,782, US 4,473,660, US 4,530,912 and US 4,560,671.
Moreover, said solid catalyst components are preferably used in combination with well known external electron donors, including ethers, ketones, amines, alcohols, phenols, phosphines and silanes, for example organosilane compounds containing Si-OCOR, Si-OR, or Si-NR₂ bonds, having silicon as the central atom, and R is an alkyl, alkenyl, aryl, arylalkyl or cycloalkyl with 1-20 carbon atoms; and well known cocatalysts, which preferably comprise an aluminium alkyl compound as known in the art; to polymerise the propylene homo or copolymer (A) and the optional, and preferable, carrier polymer (B1).
The polymerization of the propylene copolymer (A) and the carrier polymer (B1) of the optional, and preferable, MB, of the propylene compostion of the container of the invention may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred for the polymerisation of the propylene copolymer (A) and the optional, and preferable, carrier polymer (B1). It is further preferred that the reactor order is slurry (or bulk) then one or more gas phase reactors.

In case of propylene polymerisation for slurry reactors, the reaction temperature will generally be in the range 60 to 110°C, e.g. 60 to 85 °C, the reactor pressure will generally be in the range 5 to 80 bar, e.g. 20 to 60 bar, and the residence time will generally be in the range 0.1 to 5 hours, e.g. 0.3 to 2 hours. The monomer is usually used as reaction medium.

For gas phase reactors, the reaction temperature used will generally be in the range 60 to 115 °C, e.g. 70 to 110 °C, the reactor pressure will generally be in the range 10 to 25 bar, and the residence time will generally be 0.5 to 8 hours, e.g. 0.5 to 4 hours. The gas used will be the monomer optionally as mixture with a non-reactive gas such as nitrogen or propane. In addition to actual polymerisation steps and reactors, the process can contain any additional polymerisation steps, like prepolymerisation step, and any further after reactor handling steps as known in the art.

The multimodal propylene homo- or copolymer may be produced in any suitable polymerization process known in the art. Preferably the multimodal propylene polymer is produced in a sequential polymerization process comprising at least two polymerization zones operating at different conditions to produce the multimodal propylene polymer. The polymerization zones may operate in slurry, solution, or gas phase conditions or their combinations. Suitable processes are disclosed, among others, in WO-A-98/58975, WO-A-98/58976, EP-A-887380 and WO-A-98/58977.

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor.

The prepolymerization reaction is typically conducted at a temperature of 0 to 60 °C, preferably from 10 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635.

The polymerization in the first polymerization zone may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

Slurry polymerization is preferably a so called bulk polymerization. By "bulk polymerization" is meant a process where the polymerization is conducted in a liquid monomer essentially in the absence of an inert diluent.

The temperature in the slurry polymerization is typically from 50 to 110 °C, preferably from 60 to 100 °C and in particular from 65 to below 85 °C. The pressure is from 1 to 150 bar, preferably from 10 to 100 bar. In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US 4,582,816, US 3,405,109, US 3,324,093, EP-A-479186 and US 5,391,654.

The polymerization in gas phase may be conducted in a fluidized bed reactor, in a fast fluidized bed reactor or in a settled bed reactor or in any combination of these. When a combination of reactors is used then the polymer is transferred from one polymerization reactor to another. Furthermore, a part or whole of the polymer from a polymerization stage may be returned into a prior polymerization stage.

Typically the fluidized bed polymerization reactor is operated at a temperature within the range of from 50 to 100 °C, preferably from 65 to 90 °C. The pressure is suitably from 10 to 40 bar, preferably from 15 to 30 bar.

The adjustment of the MFR during the polymerisation process of propylene homo or copolymer (A) and the optional carrier polymer (B1) is carried out in a conventional manner by using e.g. a chain termination agent (known also e.g. as molecular weight of MFR controlling agent), typikally hydrogen.

The preferred multistage process is carried out in a rector system comprising at least a loop reactor and one gasphase ractor, and optionally one, two or more gas phase ractors, in said order. Said reactor system and process is known as Borstar® Technology.

### Experimental part

### 1. Measurement methods

**a) Spiral flow**

Spiral Test is carried out using an Arburg 35mm screw injection moulding apparatus with a spiral mould and a pressure of 600, 1000 or 1400 bar, and the following specifications:
screw diameter: 35 mm,
max. piston displacement: 150 cm³,
spec. injection pressure: 600, 1000, or 1400 bar,
tool form: oval form; provided by Axxicon; thickness 1 mm, breadth: 5 mm,
temperature in pre-chamber and die: 230 °C,
temperature in zone 2 / zone 3 / zone 4/ zone 5: 230 °C / 230 °C / 225 °C / 200 °C,
injection cycle: injection time including holding: 10 s,
cooling time: 15 s,
injection pressure: Follows from the predetermined length of the testing material,
dwell pressure = injection pressure,
screw speed: 30 rpm,
system pressure: 10 bar,
metering path: should be chosen so that the screw stops 20 mm before its final position at the end of the dwell pressure,
tool temperature: 40 °C,

The spiral flow length can be determined immediately after the injection operation.
**b) MFR₂** (230 °C) is measured according to ISO 1133 (230 °C, 2.16 kg load).
**c) Quantification of comonomer content** by FTIR spectroscopy:

The comonomer content was determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 micrmeter and spectra recorded in transmission mode.

Specifically, the ethylene content of a polypropylene-co-ethylene copolymer is determined using the baseline corrected peak area of the quantitative bands found at 720-722 and 730-733 cm⁻¹. Specifically, the butene or hexene content of a polypropylene copolymer is determined using the baseline corrected peak area of the quantitative bands found at 1377-1379 cm⁻¹. Quantitative results are obtained based upon reference to the film thickness.
**d) Xylene cold solubles (XCS, wt.-%)** content was determined at 25 °C according ISO 16152; first edition; 2005-07-01.
**e) Tensile modulus, tensile stress at yield and tensile strain** at yield was determined according to ISO 527-1:1996 and ISO 527-2:1996 on test specimen ISO 527-2:1996 type 1A molded specimen, the Injection moulding carried out according to ISO 1873-2:2007.
**f) Charpy nothed impact strength** was determined according to ISO 179-1:2000 on notched specimen of 80x10x4mm, cut from test specimen ISO 527-2:1996 type 1A. Notched impact specimen according to ISO 179-1/1eA:2Q00 was used. Testing temperature is 23±2°C. Injection moulding carried out according to ISO 1873-2:2007.
**g) Haze** has been determined according to ASTM D 1003-07 on test specimen ISO 294-3:2003 60x60x0.5 or 1.0 or 2.0 mm small plate, as indicated in the text, ISO type D1.
**h) Heat deflection temperature (HDT)** was determined according to ISO 75-2:2004 on specimen of 80x10x4mm, cut from test specimen ISO 527-2:1996 type 1A molded specimen. Test was performed flatwise loading, with maximum surface stress of 0.45 MPa. Injection moulding carried out according to ISO 1873-2:2007.
**i) Instrumental falling weight test (IFW)** was carried out according to ISO 6603-2:2000 on 0.5 mm thickness, cut from the bottom of thin-wall rectangular box with 0.5 mm thickness (herein e.g. 145x95x50mm box was used). Test was performed using lubricated striker, with 4,4 m/s velocity and 20 mm diameter, and support ring diameter 40 mm.

### 2. Preparation of polymers

**Preparation of the masterbatch (MB):** carrier polymer (B1) and nucleating agent (B), which was vinyl cyclohexane polymer:
First, 0.1 mol of MgCl₂ x 3 EtOH was suspended under inert conditions in 250 ml of decane in a reactor at atmospheric pressure. The solution was cooled to the temperature of -15°C and 300 ml of cold TiCl₄ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of TiCl₄ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566, EP 591 224 and EP 586 390.

Triethylaluminium (TEAL), dicyclopentyldimethoxysilane (DCPDMS) as donor (Do), catalyst as produced above and vinylcyclohexane (VCH) were added into oil, like mineral oil, e.g. Technol 68 (kinematic viscosity at 40 °C 62-74 cSt), in amounts so that Al/Ti was 3- 4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt-%.

In the first stage the catalyst described above was fed to prepolymerization reactor together with propylene and small amount of hydrogen (2.5 g/h). Triethylaluminium as a cocatalyst and dicyclopentyldimethoxysilane as a donor was used. The aluminium to donor ratio was 11.5 mol/mol and aluminium to titanium ratio was 500 mol/mol. Reactor was operated at a temperature of 30 °C and a pressure of 55 barg.

The slurry from the prepolymerization stage was directly fed to a loop reactor which was operated at 80 °C temperature and 55 barg pressure. Propylene and hydrogen were further added to the loop reactor. The molar ratio of hydrogen to propylene was 2.0 mol/kmol. The loop reactor product was having a melt index MFR₂ of 1.5 g/10min and XS of 1.5 wt-%. Production rate in loop was 30 kg/h.

The slurry from loop reactor was introduced to a gas phase reactor via direct feed line, i.e. without monomer flashing in-between the reactors. The gas phase reactor was operated at 85 °C temperature and propylene partial pressure of 21 barg. Additional hydrogen was fed with the molar ratio of hydrogen to propylene of 135 mol/kmol. The production rate in gas phase reactor was 30 kg/h and thus the total polymer production rate after the reactors was 60 kg/h. The final polymer melt index MFR₂ was 8.0 g/10 min and XS of 1.2 wt-%. The production split (% of production made in gas phase reactor) was 50 %. The final Poly-VCH content in the obtained final carrier polymer (B1) was 200 ppm or less.

The obtained polymer powder and stabilizers, i.e. 0.025 wt.% of conventional acid scavenger and 0.03 wt.% of conventional antioxidant, were mixed in W&P ZSK 70 (Coperion) twin-screw extruder at melt temperature of 240 °C and pelletized. Extruder throughput was 200 kg/h. The obtained pellets were used as the masterbatch (MB).

### Polymer 1

A solid Ziegler-Natta catalyst component was prepared otherwise according to Example 8 of WO 2004/029112, except that diethylaluminium chloride was used as an aluminium compound instead of triethylaluminium, and small amounts of hydrogen (2.5 g/h) and fed to prepolymerization reactor together with propylene ethylene (360 g/h).

Triethylaluminium as a cocatalyst and dicyclopentyldimethoxysilane as a donor was used. The aluminium to donor ratio was 7.5 mol/mol and aluminium to titanium ratio was 220 mol/mol. Reactor was operated at a temperature of 30 °C and a pressure of 55 barg.

The slurry from the prepolymerization stage was directly fed to a loop reactor which was operated at 75 °C temperature and 55 barg pressure. Propylene, hydrogen and ethylene were further added to the loop reactor. The molar ratio of hydrogen to propylene was 15 mol/kmol and the ratio of ethylene to propylene was 4 mol/kmol. The loop reactor product was having a melt index MFR₂ of 60 g/10min, ethylene content of 1.0 wt-% and XS of 2.0 wt-%. Production rate in loop was 33 kg/h.

The slurry from the loop reactor was introduced to a gas phase reactor via direct feed line, i.e. without monomer flashing in-between the reactors. The gas phase reactor was operated at 85 °C temperature and propylene partial pressure of 21 barg. Additional ethylene and hydrogen were fed with the following molar ratios: hydrogen to propylene 145 mol/kmol and ethylene to propylene 6 mol/kmol. The production rate in gas phase reactor was 33 kg/h and thus the total polymer production rate after the reactors was 66 kg/h. The final polymer melt index MFR₂ was 60 g/10 min, ethylene content 1.0 wt-% and XS of 1.5 wt-%. The production split (% of production made in gas phase reactor) was 50 %.

### Comparative Polymer 2

A solid Ziegler-Natta catalyst component was prepared otherwise according to Example 8 of WO 2004/029112, except that diethylaluminium chloride was used as an aluminium compound instead of triethylaluminium, was fed to prepolymerization reactor together with propylene and small amounts of hydrogen (2.5 g/h) and ethylene (360 g/h).

Triethylaluminium as a cocatalyst and dicyclopentyldimethoxysilane as a donor was used. The aluminium to donor ratio was 6.0 mol/mol and aluminium to titanium ratio was 220 mol/mol. Reactor was operated at a temperature of 30 °C and a pressure of 55 barg.

The slurry from the prepolymerization stage was directly fed to a loop reactor which was operated at 70 °C temperature and 55 barg pressure. Propylene, hydrogen and ethylene were further added to the loop reactor. The molar ratio of hydrogen to propylene was 15 mol/kmol and the ratio of ethylene to propylene was 9.5 mol/kmol. The loop reactor product was having a melt index MFR2 of 30 g/10min, ethylene content of 2.8 wt-% and XS of 6.0 wt-%. Production rate in loop was 27 kg/h.

The slurry from loop reactor was introduced to a gas phase reactor via direct feed line, i.e. without monomer flashing in-between the reactors. The gas phase reactor was operated at 85 °C temperature and propylene partial pressure of 21 barg. Additional ethylene and hydrogen were fed with the following molar ratios: hydrogen to propylene 120 mol/kmol and ethylene to propylene 23 mol/kmol. The production rate in gas phase reactor was 33 kg/h and thus the total polymer production rate after the reactors was 60 kg/h. The final polymer melt index MFR₂ was 30 g/10 min, ethylene content 3.4 wt-% and XS of 5.0 wt-%. The production split (% of production made in gas phase reactor) was 55 %.

### Polymer 3:

**Random copolymer of propylene** as the propylene copolymer (A), wherein the nucleating agent (B), which was, vinyl cyclohexane polymer, was introduced during the polymerisation process of the Polymer 3:
First, 0.1 mol of MgCl₂ x 3 EtOH was suspended under inert conditions in 250 ml of decane in a reactor at atmospheric pressure. The solution was cooled to the temperature of -15°C and 300 ml of cold TiCl₄ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of TiCl₄ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566, EP 591 224 and EP 586 390.

Triethylaluminium (TEAL), dicyclopentyldimethoxysilane (DCPDMS) as donor (Do), catalyst as produced above and vinylcyclohexane (VCH) were added into oil, like mineral oil, e.g. Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 - 65 °C and allowed to react until the content of the unreacted vinylcyclohexane in the reaction mixture was less than 1000 ppm. Catalyst concentration in the final oil-catalyst slurry was 10 - 20 wt-%.

The catalyst was fed to prepolymerization reactor together with propylene and small amounts of hydrogen (2.5 g/h) and ethylene (360 g/h). Triethylaluminium as a cocatalyst and dicyclopentyldimethoxysilane as a donor was used. The aluminium to donor ratio was 7.5 mol/mol and aluminium to titanium ratio was 220 mol/mol. Reactor was operated at a temperature of 30 °C and a pressure of 55 barg.

The slurry from the prepolymerization stage was directly fed to a loop reactor which was operated at 75 °C temperature and 55 barg pressure. Propylene, hydrogen and ethylene were further added to the loop reactor. The molar ratio of hydrogen to propylene was 8 mol/kmol and the ratio of ethylene to propylene was 2 mol/kmol. The loop reactor product was having a melt index MFR₂ of 60 g/10min, ethylene content of 0.5 wt-% and XS of 2.0 wt-%. Production rate in loop was 27 kg/h.

The slurry from loop reactor was introduced to a gas phase reactor via direct feed line, i.e. without monomer flashing in-between the reactors. The gas phase reactor was operated at 85 °C temperature and propylene partial pressure of 21 barg. Additional ethylene and hydrogen were fed with the following molar ratios: hydrogen to propylene 120 mol/kmol and ethylene to propylene 25 mol/kmol. The production rate in gas phase reactor was 33 kg/h and thus the total polymer production rate after the reactors was 60 kg/h. The final polymer melt index MFR₂ was 30 g/10 min, ethylene content 2.5 wt-% and XS of 3.5 wt-%. The production split (% of production made in gas phase reactor) was 55 %. The final Poly-VCH content in the obtained final polymer 3 was 200 ppm or less.

### Polymer 4

A solid Ziegler-Natta catalyst component was prepared otherwise according to Example 8 of WO 2004/029112, except that diethylaluminium chloride was used as an aluminium compound instead of triethylaluminium, was fed to prepolymerization reactor together with propylene and small amounts of hydrogen (2.5 g/h) and ethylene (360 g/h).

The catalyst was fed to prepolymerization reactor together with propylene and small amounts of hydrogen (2.5 g/h) and ethylene (360 g/h). Triethylaluminium as a cocatalyst and dicyclopentyldimethoxysilane as a donor was used. The aluminium to donor ratio was 7.5 mol/mol and aluminium to titanium ratio was 220 mol/mol. Reactor was operated at a temperature of 30 °C and a pressure of 55 barg.

The slurry from the prepolymerization stage was directly fed to a loop reactor which was operated at 70 °C temperature and 55 barg pressure. Propylene, hydrogen and ethylene were further added to the loop reactor. The molar ratio of hydrogen to propylene was 6 mol/kmol and the ratio of ethylene to propylene was 11 mol/kmol. The loop reactor product was having a melt index MFR₂ of 8 g/10min, ethylene content of 2.8 wt-% and XS of 5.0 wt-%. Production rate in loop was 27 kg/h.

The slurry from loop reactor was introduced to a gas phase reactor via direct feed line, i.e. without monomer flashing in-between the reactors. The gas phase reactor was operated at 85 °C temperature and propylene partial pressure of 21 barg. Additional ethylene and hydrogen were fed with the following molar ratios: hydrogen to propylene 45 mol/kmol and ethylene to propylene 21 mol/kmol. The production rate in gas phase reactor was 33 kg/h and thus the total polymer production rate after the reactors was 60 kg/h. The final polymer melt index MFR₂ was 8 g/10 min, ethylene content 2.8 wt-% and XS of 5.0 wt-%. The production split (% of production made in gas phase reactor) was 55 %.

The final polymer obtained from the reactor was visbroken in a conventional manner using a commerical peroxide, CAS-No. 78-63-7, to increase the melt flow rate of the polymer to MFR₂ of 30 g/10 min.

### Reference 1:

A commercial propylene homopolymer for IM and thin-wall packaging which is visbroken with peroxide to result in MFR₂ of 50g/10 min.

**Preparation of Inventive compositions 1 to 12 (C1 to C12) and Ref.2** - **Compounding:** The polymers 1 to 4 (P1, Comp. P2, P3 and P4) were compounded with masterbatch (MB) and/or additives as given in the below Table 1 to obtain inventive polypropylene compositions 1 and 8 to 11 (C1 and C8 to C11), comparative polypropylene compositions 2 to 7 and 12 (CC2 to CC7 and CC12), and reference composition Ref.2. All indications in Table 1 are in weight%. The compounding was effected by mixing in W&P ZSK 70 (Coperion) twin-screw extruder at melt temperature of 240 °C and pelletized. Extruder throughput was 200 kg/h.

**Table 1: Components of the inventive polymer compositions C1 and C8 to C11, comparative polypropylene compositions CC2 to CC7 and CC12 and reference composition Ref.2**

| | **C1** | **CC2** | **CC3** | **CC4** | **CC5** | **CC6** | **CC7** | **C8** | **C9** | **C10** | **C11** | **Ref.2** |
|---|---|---|---|---|---|---|---|---|---|---|---|---|
| P1 | 97.585 | | | | | | | 97.56 | 97.55 | 97.56 | 97.54 | |
| Comp. P2 | | 97.585 | | | | | | | | | | |
| P3 | | | 99.585 | 99.415 | 99.485 | 99.385 | | | | | | |
| P4 | | | | | | | 97.570 | | | | | 99.570 |
| Masterbatch (MB) | 2.0 | 2.0 | - | - | - | - | 2.0 | 2.0 | 2.0 | 2.0 | 2.0 | - |
| Calcium stearate | 0.040 | 0.040 | 0.040 | 0.040 | 0.040 | 0.040 | 0.040 | 0.040 | 0.040 | 0.040 | 0.040 | 0.040 |
| Irganox 1010⁽¹⁾ | 0.025 | 0.025 | 0.025 | 0.025 | 0.025 | 0.025 | 0.025 | 0.025 | 0.025 | 0.025 | 0.025 | 0.025 |
| Irgafos 168⁽²⁾ | 0.050 | 0.050 | 0.050 | 0.050 | 0.050 | 0.050 | 0.050 | 0.050 | 0.050 | 0.050 | 0.050 | 0.050 |
| GMS95⁽³⁾ | 0.300 | 0.300 | 0.300 | 0.300 | 0.300 | 0.300 | 0.300 | 0.300 | 0.300 | 0.300 | 0.300 | 0.300 |
| Millad 3988i⁽⁴⁾ | | 0.170 | | 0.170 | | | | | | | | |
| NX8000⁽⁵⁾ | | | | | 0.100 | 0.200 | | | | | | |
| Irgaclear⁽⁶⁾ | | | | | | | 0.015 | | | | | 0.015 |
| NA-21⁽⁷⁾ | | | | | | | | 0.025 | 0.035 | | | |
| NA-71⁽⁸⁾ | | | | | | | | | | 0.025 | 0.040 | |

| | | | | | | | | | | | | |
|---|---|---|---|---|---|---|---|---|---|---|---|---|
| ⁽¹⁾ Pentaerythrityl-tetrakis(3-(3',5'-di-*tert*.-butyl-4-hydroxyphenyl)-propionate (CAS-no. 6683-19-8) ⁽²⁾ (2,4-di-t-butylphenyl) phosphite (CAS-no. 31570-04-4) ⁽³⁾ mixture of glyceryl monostearate (CAS-no. 97593-29-8) ⁽⁴⁾ Bis(3,4-dimethylbenzylidene) sorbitol (CAS-no. 135861-56-2) ⁽⁵⁾ 1,2,3-trideoxy-4,6:5,7-bis-O-((4-propylphenyl) methylene) nonitol (CAS-no. 882073-43-0) ⁽⁶⁾ N-[3,5-bis-(2,2-dimethyl-propionylamino)-phenyl]-2,2-dimethyl-propionamide (CAS-no. 745070-61-5) ⁽⁷⁾ Hydroxybis (2,4,8,10-tetra-tert. butyl-6-hydroxy-12H-dibenzo(d,g)(1.,3,2) dioxaphosphocin 6-oxidato) aluminium (CAS-no. 151841-65-5) ⁽⁸⁾ ADK STAB NA-71 commercial phosphate based compound, supplied by Adeka | | | | | | | | | | | | |

The compositions/polymers have the properties provided in the following tables. The test specimens were prepared using the compounded pellets.

Comparable results would be obtained using samples molten from injection moulded containers produced from the inventive polymer compositions C1 and C8 to C11, comparative polymer compositions CC2 to CC7 and C12 and reference compositions.

Table 2 shows the advantageous impact/stiffness balance of the polymer composition C1 of the invention compared to visbroken Reference (Ref.1). Tensile Modulus of C1 is at similar level as that of Ref.1 while Charpy Impact Strength and Tensile Strain at Yield of C1 are even improved. Comparative polymer composition CC2 represents the Embodiment (D) of the invention and shows the advantageous impact/stiffness balance combined with improved haze.

**Table 2:**

| **Properties** | **Unit** | **Ref.1** | **C1** | **CC2** |
|---|---|---|---|---|
| Tensile Modulus | MPa | 1850 | 1710 | 1050 |
| Tensile Strain at Yield | % | 7.3 | 8.2 | |
| Charpy Impact, notched 23°C | kJ/m² | 1.9 | 2.1 | 6.5 |
| HDT (0.46 MPa) | °C | 102.9 | 103.0 | |
| Haze, test sample 0.5 mm | % | 25 | 28 | 6 |

The instrumental Falling Weight (IFW) test results in Table 3 show the improved mechanical properties as a result of the advantageous impact/stiffness balance provided by the feature combination as defined in claim 1 of the propylene composition of the invention.

**Table 3:**

| **Properties** | **Unit** | **C1** | **Ref. 1** |
|---|---|---|---|
| IFW, 23°C, pucutre energy | J | 0.16 | 0.10 |

Table 4 shows the clearly improved processability (flowability) demonstrated by Spiral Flow (carried out five times and the average values are given) of the inventive composition C1.

**Table 4:**

| | C1 | Ref.1 |
|---|---|---|
| Spiral Flow (cm) at 1400 bar | 66.4 | 61.4 |
| Spiral Flow (cm) at 1000 bar | 52.4 | 49.3 |
| Spiral Flow (cm) at 600 bar | 35.4 | 34.0 |

Moreover, containers prepared from C1 and CC2 by injection moulding in a conventional manner are devoid of taste and odor problems and have appealing whitish color when stacked up.

The following tables show that also propylene compositions according to Embodiment (D) of the invention have the highly advantageous inventive properties

Table 5 shows that addition of an Additive (C1) as defined above or in claims provides a further improvement in impact/stiffness balance and haze.

**Table 5:**

| | **CC3** | **CC4** | **CC5** | **CC6** |
|---|---|---|---|---|
| **Haze (%)**, 1.0 mm test sample | 34 | 13.5 | 35 | 16 |
| Tensile modulus [MPa] | 1365 | 1410 | 1350 | 1380 |
| Charpy 23°C [kJ/m²] | 4.3 | 5.9 | 5.8 | 5.5 |

Table 6 shows that Charpy Impact Strength is improved with the visbroken CC7 over Ref. 2 without nucleating agent (B)

**Table 6:**

| | **Ref.2** | **CC7** |
|---|---|---|
| **Haze (%)**, 1.0 mm test sample | 14 | 14 |
| Tensile modulus [MPa] | 1220 | 1210 |
| Charpy 23°C [kJ/m²] | 5.1 | 5.9 |

Table 7 shows with C8 to C11 of Embodiment (D) of the invention that the advantageous inventive properties are obtained even when using further Additives (C1) in amounts which are lower than conventionally used amounts. Moreover, the Charpy Impact Strength (impact) of C8 to C11 is slightly higher and haze clearly lower compared to C1 of the invention, but without Additive (C1). Furthermore, unexpectedly, the Tensile Modulus (stiffness) of C8 to C11 is also improved compared to C1. Accordingly, the polypropylene composition of the embodiment (D) can be used to produced e.g IM containers for applications with very demanding requirements for mechanical properties combined with excellent optical properties.

**Table 7:**

| | **C1** | **C8** | **C9** | **C10** | **C11** |
|---|---|---|---|---|---|
| Tensile modulus [MPa] | 1710 | 1830 | 1855 | 1820 | 1850 |
| Charpy 23°C [kJ/m²] | 2.1 | 2.2 | 2.3 | 2.2 | 2.2 |
| Haze (%), 2.0 mm test sample | 94 | 81 | 70 | 85 | 75 |

A further comparative composition CC12 was made by compounding polymer 2 in addition to additives given in Table 1 for CC2 with a further additive, namely an optical brightener, Tinopal supplied by Ciba, in an amount of 100 ppm by weight based on the total weight of the obtained polymer composition CC12. The optical brightener contributed a slightly blue colour to whitish container produced from the composition 3 resulting in very desirable appearance.

## Claims

1. An injection moulded (IM) container for food packaging comprising a polypropylene composition, the polypropylene composition comprising
- a propylene copolymer (A) with one or more olefin comonomer(s) in an amount of 95.0 to 99.25 wt.%, based on the total weight of the polypropylene composition, wherein propylene copolymer (A) has
(i) a melt flow rate, determined according to ISO 1133 at 230 °C and under a load of 2.16 kg, of at least 25 g/10 min and not higher than 200 g/10 min; and
(ii) a total olefin comonomer content of not more than 3.0 wt.% and at least 0.1 wt.%, based on the total weight of the polypropylene composition;
and
- a nucleating agent (B), which is a polymeric nucleating agent,
wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007).

2. The container according to claim 1, which is a container for thin-wall packagings.

3. The container according to claim 1 or 2, wherein the wall thickness of the container is 2.0 mm or less.

4. The container according to any of the preceding claims, wherein the polypropylene composition of the container has a Melt Flow Rate, MFR₂, determined according to ISO 1133 at 230 °C and under a load of 2.16 kg, is at least 35 g/10 min and/or said MFR₂ is not higher than 125 g/10 min.

5. The container according to any of the preceding claims, wherein the propylene copolymer (A) is a copolymer of propylene with one or more olefin comonomer(s), whereby the total olefin comonomer content is not more than 2.5 wt%, based on the total weight of the polypropylene composition (100 wt.%).

6. The container according to any of the preceding claims, wherein the polypropylene composition of the container has one or more of:
- Xylene Solubles content (XS), determined according to ISO 16152:2005 of not more than 5.5 wt.%, based on the total weight of the propylene composition (100 wt.%);
- Charpy Notched Impact Strength of at least 1.9 kJ/m², when determined according to ISO 179-1:2000 on notched specimen of 80x10x4 mm, cut from test specimen ISO 527-2:1996 type 1A (notched impact specimen according to ISO 179-1/1eA was used, with the testing temperature being 23±2°C, and injection moulding being carried out according to ISO 1873-2:2007);
- Tensile Modulus of at least 1400 MPa, when determined according to ISO 527-1:1996 and ISO 527-2:1996 on test specimen ISO 527-2:1996 type 1A moulded specimen (with the injection moulding carried out according to ISO 1873-2:2007); and/or
- Total olefin comonomer content of not more than 3.0 wt.% and said total olefin comonomer content is at least 0.1 wt.%, based on the total weight of the propylene composition (100 wt.%).

7. The container according to any of the preceding claims, wherein the Melt Flow Rate MFR₂, determined according to ISO 1133 at 230 °C and under a load of 2.16 kg, of propylene copolymer (A) is at least 35 g/10 min and/or said MFR₂ of propylene copolymer (A) is not higher than 125 g/10 min.

8. The container according to any of the preceding claims, wherein the nucleating agent (B) is a polymerized vinyl compound.

9. The container according to any of the preceding claims, wherein the nucleating agent (B) is introduced to the propylene copolymer (A), optionally together with one or more other additives, by mechanical blending of said components (A) and (B); or the nucleating agent (B) is introduced to the propylene copolymer (A) during the polymerisation process of the propylene copolymer (A).

10. The container according to any of the preceding claims, wherein the polypropylene composition comprises
- the propylene copolymer (A); and
- a masterbatch (MB) comprising a nucleating agent (B) and a carrier polymer (B1).

11. The container according to claim 10, wherein the carrier polymer (B1) is a propylene homo- or copolymer.

12. The container according to claim 10 or 11, wherein the nucleating agent (B) is introduced to the carrier polymer (B1) during the polymerisation process of the carrier polymer (B1).

13. The container according to any of the preceding claims, wherein the nucleating agent (B) is the only nucleating agent and/or clarifier in the polypropylene composition.

14. The container according to any of claims 1 to 12, wherein the polypropylene composition further comprises
- an additive (C1) which is different from the nucleating agent (B) and is a nucleating agent and/or clarifier.

15. The container according to claim 14, wherein additive (C1) is selected from the groups:
1. Salts of monocarboxylic acids and polycarboxylic acids;
2. Sorbitol compounds;
3. Nonitol based nucleating agents;
4. Phosphorous-based compounds;
5. Hindered phenyl amines;
6. Talc; or
7. a mixture of additives (C1) from any of groups 1. to 6.

16. The container according to any of the preceding claims, wherein the amount of nucleating agent (B) is not more than 3000 ppm, based on the combined weight of propylene copolymer (A), nucleating agent (B) and optional carrier polymer (B1) and
the amount of propylene copolymer (A) is of 96.5 to 98.5 wt.%, based on the combined weight of propylene copolymer (A), nucleating agent (B) and optional carrier polymer (B1).

17. The container according to any of the preceding claims, wherein propylene copolymer (A) has not been subjected to a peroxide treatment after its polymerization thereof.

18. The use of a polypropylene composition comprising
- a propylene copolymer (A) with one or more olefin comonomer(s) in an amount of 95.0 to 99.25 wt.%, based on the total weight of the polypropylene composition, wherein propylene copolymer (A) has
(i) a melt flow rate, determined according to ISO 1133 at 230 °C and under a load of 2.16 kg, of at least 25 g/10 min and not higher than 200 g/10 min; and
(ii) a total olefin comonomer content of not more than 3.0 wt.% and at least 0.1 wt.%, based on the total weight of the polypropylene composition;
and
- a nucleating agent (B), which is a polymeric nucleating agent, wherein the nucleating agent (B) is the only nucleating agent and/or clarifier present in the polypropylene composition;
wherein the polypropylene composition has a tensile modulus of at least 1300 MPa, when determined according to ISO 527-1:1996 and ISO 527-2:1996 on test specimen ISO 527-2:1996 type 1A moulded specimen (with the injection moulding carried out according to ISO 1873-2:2007),
for the manufacture of an injection moulded (IM) container.

## Patentansprüche

1. Spritzgegossener (IM; für Englisch "injection moulded") Behälter zur Nahrungsmittelverpackung, umfassend eine Polypropylenzusammensetzung, wobei die Polypropylenzusammensetzung das Folgende umfasst:
- ein Propylencopolymer (A) mit einem oder mehreren Olefincomonomeren mit einer Menge von 95,0 bis 99,25 Gew.-%, basierend auf dem Gesamtgewicht der Polypropylenzusammensetzung, wobei das Propylencopolymer (A) das Folgende aufweist:
(i) einen Schmelzflussindex, bestimmt gemäß ISO 1133 bei 230 °C und unter einer Last von 2,16 kg, von mindestens 25 g/10 min und nicht mehr als 200 g/10 min; und
(ii) einen Olefincomonomergesamtgehalt von nicht mehr als 3,0 Gew.-% und mindestens 0,1 Gew.-%, basierend auf dem Gesamtgewicht der Polypropylenzusammensetzung;
und
- ein Nukleierungsmittel (B), das ein polymeres Nukleierungsmittel ist, wobei die Polypropylenzusammensetzung einen Zugmodul von mindestens 1300 MPa aufweist, wenn dieser gemäß ISO 527-1:1996 und ISO 527-2:1996 an Prüfkörpern, ISO 527-2:1996 Typ 1A geformte Prüfkörper (wobei das Spritzgießen gemäß ISO 1873-2:2007 durchgeführt wird), bestimmt wird.

2. Behälter nach Anspruch 1, der ein Behälter für Dünnwandverpackungen ist.

3. Behälter nach Anspruch 1 oder 2, wobei die Wanddicke des Behälters 2,0 mm oder weniger beträgt.

4. Behälter nach einem der vorhergehenden Ansprüche, wobei die Polypropylenzusammensetzung des Behälters einen Schmelzflussindex, MFR₂, bestimmt gemäß ISO 1133 bei 230 °C und unter einer Last von 2,16 kg, von mindestens 35 g/10 min aufweist und/oder der MFR₂ nicht höher als 125 g/10 min ist.

5. Behälter nach einem der vorhergehenden Ansprüche, wobei das Propylencopolymer (A) ein Copolymer aus Propylen mit einem oder mehreren Olefincomonomeren ist, wobei der Olefincomonomergesamtgehalt nicht mehr als 2,5 Gew.-% beträgt, basierend auf dem Gesamtgewicht der Polypropylenzusammensetzung (100 Gew.-%).

6. Behälter nach einem der vorhergehenden Ansprüche, wobei die Polypropylenzusammensetzung des Behälters eines oder mehreres von dem Folgenden aufweist:
- einen Gehalt an xylollöslichen Bestandteilen (XS), bestimmt gemäß ISO 16152:2005, von nicht mehr als 5,5 Gew.-%, basierend auf dem Gesamtgewicht der Propylenzusammensetzung (100 Gew.-%);
- eine Charpy-Kerbschlagzähigkeit von mindestens 1,9 kJ/m², wenn diese gemäß ISO 179-1:2000 an gekerbten Prüfkörpern mit 80 x 10x4 mm bestimmt wird, die aus Testprüfkörpern, ISO 527-2:1996 Typ 1A geschnitten wurden (es wurden gekerbte Prüfkörper gemäß ISO 179-1/1eA verwendet, wobei die Testtemperatur 23 ± 2 °C betrug und das Spritzgießen gemäß ISO 1873-2:2007 durchgeführt wurde);
- einen Zugmodul von mindestens 1400 MPa aufweist, wenn dieser gemäß ISO 527-1:1996 und ISO 527-2:1996 an Prüfkörpern, ISO 527-2:1996 Typ 1A geformte Prüfkörper (wobei das Spritzgießen gemäß ISO 1873-2:2007 durchgeführt wird), bestimmt wird; und/oder
- einen Olefincomonomergesamtgehalt von nicht mehr als 3,0 Gew.-% und wobei der Olefincomonomergesamtgehalt mindestens 0,1 Gew.-% beträgt, basierend auf dem Gesamtgewicht der Propylenzusammensetzung (100 Gew.-%).

7. Behälter nach einem der vorhergehenden Ansprüche, wobei der Schmelzflussindex MFR₂, bestimmt gemäß ISO 1133 bei 230 °C und unter einer Last von 2,16 kg, von dem Propylencopolymer (A) mindestens 35 g/10 min beträgt und/oder der MFR₂ von dem Propylencopolymer (A) nicht höher als 125 g/10 min ist.

8. Behälter nach einem der vorhergehenden Ansprüche, wobei das Nukleierungsmittel (B) eine polymerisierte Vinylverbindung ist.

9. Behälter nach einem der vorhergehenden Ansprüche, wobei das Nukleierungsmittel (B) in das Propylencopolymer (A), optional zusammen mit einem oder mehreren anderen Zusatzstoffen, durch mechanisches Mischen der Komponenten (A) und (B) eingeführt wird; oder das Nukleierungsmittel (B) in das Propylencopolymer (A) während des Polymerisationsverfahrens von dem Propylencopolymer (A) eingeführt wird.

10. Behälter nach einem der vorhergehenden Ansprüche, wobei die Polypropylenzusammensetzung das Folgende umfasst:
- das Propylencopolymer (A); und
- ein Masterbatch (MB), das ein Nukleierungsmittel (B) und ein Trägerpolymer (B1) umfasst.

11. Behälter nach Anspruch 10, wobei das Trägerpolymer (B1) ein Propylenhomo- oder -copolymer ist.

12. Behälter nach Anspruch 10 oder 11, wobei das Nukleierungsmittel (B) in das Trägerpolymer (B1) während des Polymerisationsverfahrens von dem Trägerpolymer (B1) eingeführt wird.

13. Behälter nach einem der vorhergehenden Ansprüche, wobei das Nukleierungsmittel (B) das einzige Nukleierungsmittel und/oder Klärmittel in der Polypropylenzusammensetzung ist.

14. Behälter nach einem der Ansprüche 1 bis 12, wobei die Polypropylenzusammensetzung ferner das Folgende umfasst:
- einen Zusatzstoff (C1), der sich von dem Nukleierungsmittel (B) unterscheidet und der ein Nukleierungsmittel und/oder ein Klärmittel ist.

15. Behälter nach Anspruch 14, wobei der Zusatzstoff (C1) aus den folgenden Gruppen ausgewählt ist:
1. Salze von Monocarbonsäuren und Polycarbonsäuren;
2. Sorbitolverbindungen;
3. Nukleierungsmittel auf Monitolbasis;
4. Phosphorbasierte Verbindungen;
5. Gehinderte Phenylamine;
6. Talk; oder
7. eine Mischung aus Zusatzstoffen (C1) von irgendeiner der Gruppen 1. bis 6.

16. Behälter nach einem der vorhergehenden Ansprüche, wobei die Menge an Nukleierungsmittel (B) nicht mehr als 3000 ppm beträgt, basierend auf dem kombinierten Gewicht von dem Propylencopolymer (A), dem Nukleierungsmittel (B) und dem optionalen Trägerpolymer (B1) und
die Menge an Propylencopolymer (A) 96,5 bis 98,5 Gew.-% beträgt, basierend auf dem kombinierten Gewicht von dem Propylencopolymer (A), dem Nukleierungsmittel (B) und dem optionalen Trägerpolymer (B1).

17. Behälter nach einem der vorhergehenden Ansprüche, wobei das Propylencopolymer (A) nach seiner Polymerisation keiner Peroxidbehandlung unterzogen worden ist.

18. Verwendung von einer Polypropylenzusammensetzung, umfassend
- ein Propylencopolymer (A) mit einem oder mehreren Olefincomonomeren mit einer Menge von 95,0 bis 99,25 Gew.-%, basierend auf dem Gesamtgewicht der Polypropylenzusammensetzung, wobei das Propylencopolymer (A) das Folgende aufweist:
(i) einen Schmelzflussindex, bestimmt gemäß ISO 1133 bei 230 °C und unter einer Last von 2,16 kg, von mindestens 25 g/10 min und nicht mehr als 200 g/10 min; und
(ii) einen Olefincomonomergesamtgehalt von nicht mehr als 3,0 Gew.-% und mindestens 0,1 Gew.-%, basierend auf dem Gesamtgewicht der Polypropylenzusammensetzung;
und
- ein Nukleierungsmittel (B), das ein polymeres Nukleierungsmittel ist, wobei das Nukleierungsmittel (B) das einzige Nukleierungsmittel und/oder Klärmittel in der Polypropylenzusammensetzung ist,
wobei die Polypropylenzusammensetzung einen Zugmodul von mindestens 1300 MPa aufweist, wenn dieser gemäß ISO 527-1:1996 und ISO 527-2:1996 an Prüfkörpern, ISO 527-2:1996 Typ 1A geformte Prüfkörper (wobei das Spritzgießen gemäß ISO 1873-2:2007 durchgeführt wird), bestimmt wird,
für die Herstellung von einem spritzgegossenen (IM; für Englisch "injection moulded") Behälter.

## Revendications

1. Récipient moulé par injection (IM) pour le conditionnement d'aliments, comprenant une composition de polypropylène, la composition de polypropylène comprenant
- un copolymère de propylène (A) avec un ou plusieurs comonomères oléfiniques en une quantité de 95,0 à 99,25 % en poids par rapport au poids total de la composition de polypropylène, lequel copolymère de propylène (A) a
(i) un indice de fluage, déterminé conformément à la norme ISO 1133 à 230 °C et sous une charge de 2,16 kg, d'au moins 25 g/10 min et non supérieur à 200 g/10 min ; et
(ii) une teneur totale en comonomères oléfiniques non supérieure à 3,0 % en poids et d'au moins 0,1 % en poids par rapport au poids total de la composition de polypropylène ;
et
- un agent de nucléation (B), qui est un agent de nucléation polymère,
dans lequel la composition de polypropylène a un module de traction d'au moins 1300 MPa lorsqu'il est déterminé conformément aux normes ISO 527-1:1996 et ISO 527-2:1996 sur une éprouvette moulée d'une éprouvette ISO 527-2:1996 de type 1A (le moulage par injection étant effectué conformément à la norme ISO 1873-2:2007).

2. Récipient selon la revendication 1, qui est récipient pour conditionnements à parois minces.

3. Récipient selon la revendication 1 ou 2, dans lequel l'épaisseur de paroi du récipient est de 2,0 mm ou moins.

4. Récipient selon l'une quelconque des revendications précédentes, dans lequel la composition de polypropylène du récipient a un indice de fluage, MFR₂, déterminé conformément à la norme ISO 1133 à 230 °C et sous une charge de 2,16 kg, qui est d'au moins 35 g/10 min, et/ou dans lequel ledit MFR₂ n'est pas supérieur à 125 g/10 min.

5. Récipient selon l'une quelconque des revendications précédentes, dans lequel le copolymère de propylène (A) est un copolymère de propylène avec un ou plusieurs comonomères oléfiniques, de façon que la teneur totale en comonomères oléfiniques ne soit pas supérieure à 2,5 % en poids par rapport au poids total de la composition de polypropylène (100 % en poids).

6. Récipient selon l'une quelconque des revendications précédentes, dans lequel la composition de polypropylène du récipient a un ou plusieurs parmi :
- une teneur en composés solubles dans le xylène (XS), déterminée conformément à la norme ISO 16152:2005, non supérieure à 5,5 % en poids par rapport au poids total de la composition de propylène (100 % en poids) ;
- une résistance au choc Charpy sur barreau entaillé d'au moins 1,9 kJ/m2, lorsqu'il est déterminé conformément à la norme ISO 179-1:2000 sur une éprouvette entaillée de 80 x 10 x 4 mm découpée dans une éprouvette ISO 527-2:1996 de type 1A (une éprouvette de résistance au choc sur barreau entaillé conformément à la norme ISO 179-1/1eA a été utilisée, la température de test étant de 23 ± 2 °C, et le moulage par injection étant effectué conformément à la norme ISO 1873-2:2007) ;
- un module de traction d'au moins 1400 MPa lorsqu'il est déterminé conformément aux normes ISO 527-1:1996 et ISO 527-2:1996 sur une éprouvette moulée d'une éprouvette ISO 527-2:1996 de type 1A (le moulage par injection étant effectué conformément à la norme ISO 1873-2:2007) ; et/ou
- une teneur totale en comonomères oléfiniques non supérieure à 3,0 % en poids, la teneur totale en comonomères oléfiniques étant d'au moins 0,1 % en poids, par rapport au poids total de la composition de propylène (100 % en poids).

7. Récipient selon l'une quelconque des revendications précédentes, dans lequel l'indice de fluage MFR₂, déterminé conformément à la norme ISO 1133 à 230 °C et sous une charge de 2,16 kg, du copolymère de propylène (A) est d'au moins 35 g/10 min et/ou ledit MFR₂ du copolymère de propylène (A) n'est pas supérieur à 125 g/10 min.

8. Récipient selon l'une quelconque des revendications précédentes, dans lequel l'agent de nucléation (B) est un composé vinylique polymérisé.

9. Récipient selon l'une quelconque des revendications précédentes, dans lequel l'agent de nucléation (B) est introduit dans le copolymère de propylène (A), éventuellement conjointement avec un ou plusieurs autres additifs, par mélange mécanique desdits composants (A) et (B) ; ou bien l'agent de nucléation (B) est introduit dans le copolymère de propylène (A) durant le procédé de polymérisation du copolymère de propylène (A).

10. Récipient selon l'une quelconque des revendications précédentes, dans lequel la composition de polypropylène comprend
- le copolymère de propylène (A) ; et
- un mélange maître (MB) comprenant un agent de nucléation (B) et un polymère de support (B1).

11. Récipient selon la revendication 10, dans lequel le polymère de support (B1) est un homo- ou co-polymère de propylène.

12. Récipient selon la revendication 10 ou 11, dans lequel l'agent de nucléation (B) est introduit dans le polymère de support (B1) durant le procédé de polymérisation du polymère de support (B1).

13. Récipient selon l'une quelconque des revendications précédentes, dans lequel l'agent de nucléation (B) est le seul agent de nucléation et/ou clarificateur dans la composition de polypropylène.

14. Récipient selon l'une quelconque des revendications 1 à 12, dans lequel la composition de polypropylène comprend en outre
- un additif (C1) qui est différent de l'agent de nucléation (B) et qui est un agent de nucléation et/ou un clarificateur.

15. Récipient selon la revendication 14, dans lequel l'additif (C1) est choisi parmi les groupes suivants :
1. les sels d'acides monocarboxyliques et d'acides polycarboxyliques ;
2. les composés de sorbitol ;
3. les agents de nucléation à base de nonitol ;
4. les composés à base de phosphore ;
5. les phénylamines encombrées ;
6. le talc ; et
7. un mélange d'additifs (C1) de n'importe lesquels des groupes 1 à 6.

16. Récipient selon l'une quelconque des revendications précédentes, dans lequel la quantité d'agent de nucléation (B) est d'au plus 3000 ppm par rapport au poids combiné du copolymère de propylène (A), de l'agent de nucléation (B) et du polymère de support optionnel (B1), et
la quantité de copolymère de propylène (A) est de 96,5 à 98,5 % en poids par rapport au poids combiné du copolymère de propylène (A), de l'agent de nucléation (B) et du polymère de support optionnel (B1).

17. Récipient selon l'une quelconque des revendications précédentes, dans lequel le copolymère de propylène (A) n'a pas subi de traitement au peroxyde après sa polymérisation.

18. Utilisation d'une composition de polypropylène comprenant
- un copolymère de propylène (A) avec un ou plusieurs comonomères oléfiniques en une quantité de 95,0 à 99,25 % en poids par rapport au poids total de la composition de polypropylène, lequel copolymère de propylène (A) a
(i) un indice de fluage, déterminé conformément à la norme ISO 1133 à 230 °C et sous une charge de 2,16 kg, d'au moins 25 g/10 min et non supérieur à 200 g/10 min ; et
(ii) une teneur totale en comonomères oléfiniques non supérieure à 3,0 % en poids et d'au moins 0,1 % en poids par rapport au poids total de la composition de polypropylène ;
et
- un agent de nucléation (B), qui est un agent de nucléation polymère, lequel agent de nucléation (B) est le seul agent de nucléation et/ou clarificateur présent dans la composition de polypropylène ;
dans laquelle la composition de polypropylène a un module de traction d'au moins 1300 MPa lorsqu'il est déterminé conformément aux normes ISO 527-1:1996 et ISO 527-2:1996 sur une éprouvette moulée d'une éprouvette ISO 527-2:1996 de type 1A (le moulage par injection étant effectué conformément à la norme ISO 1873-2:2007),
pour la fabrication d'un récipient moulé par injection (IM).
